# FASCICULE DE BREVET EUROPEEN

(11) **EP 0 565 425 B1**
(45) Date de publication et mention de la délivrance du brevet: **27.10.1999**
(21) Numéro de dépôt: 93400880.6
(22) Date de dépôt: 05.04.1993
(51) Int. Cl.: C08F 283/00, C08G 18/67, C08G 18/38, C08G 18/77, C03C 25/02, C08F 20/38

(54) **Matériau polymère de type polyuréthanne acrylate pour revêtement de fibre optique ou pour ruban à fibres optiques**
Polyurethanacrylat-Polymermaterial für die Beschichtung von optischen Fasern oder für Bandkabel aus optischen Fasern
Polyurethane acrylate type polymeric material for the coating of optical fiber of for ribbon optical fibers

(30) Priorité: 07.04.1992 FR 9204222
(43) Date de publication de la demande: 13.10.1993
(73) Titulaire: ALCATEL, 75008 Paris (FR)
(72) Inventeur: Barraud, Jean-Yves, F-75010 Paris (FR); Gervat, Sophie, F-78340 Les Clayes sous Bois (FR); Ratovelomanana, Victorin, F-91170 Viry Chatillon (FR); Boutevin, Bernard, F-34000 Montpellier (FR); Parisi, Jean-Pierre, F-34090 Montpellier (FR); Cahuzac, Aline, F-30000 Nimes (FR); Jocteur, Robert, F-69004 Lyon (FR)
(74) Mandataire: Feray, Valérie

(56) Documents cités:
- EP-A- 0 260 842
- FR-A- 2 453 871
- GB-A- 1 325 429
- CHEMICAL ABSTRACTS, vol. 112, no. 24, 11 Juin 1990, Columbus, Ohio, US; abstract no. 218340p, page 61 ;
- CHEMICAL ABSTRACTS, vol. 112, no. 24, 11 Juin 1990, Columbus, Ohio, US; abstract no. 222177h, page 330-331 ;
- DATABASE WPIL Week 9210, Derwent Publications Ltd., London, GB; AN 92-075391

## Description

La présente invention concerne un matériau polymère de type polyuréthanne acrylate pour revêtement de fibre optique ou pour ruban à fibres optiques.

On sait que les fibres optiques comportent un double revêtement polymère constitué d'un revêtement primaire plastifié en contact avec la fibre de verre et surmonté d'un revêtement secondaire. Ce double revêtement protège la fibre des agressions mécaniques ou chimiques susceptibles de provoquer des défauts d'atténuation pour les transmissions optiques.

Chaque revêtement doit posséder une bonne adhérence sur le support qui lui est destiné, et ses propriétés physiques doivent être compatibles avec les conditions de fibrage, en particulier la vitesse de fibrage. Le revêtement primaire doit absorber les microcourbures et les contraintes éventuelles sur le verre. Le revêtement secondaire confère à la fibre ses propriétés mécaniques. En outre l'application des fibres optiques, tant dans la transmission sous-marine que dans la transmission terrestre, exige une étanchéité optimale.

A l'heure actuelle les revêtements primaires et secondaires contiennent des polymères du type polyuréthanne acrylate photoréticulés sous rayonnement ultra-violet. Si leurs propriétés mécaniques répondent aux exigences précitées, leur absorption à l'humidité est trop importante, comme par exemple la résine hydrophile citée dans la demande de brevet japonais JP-4 018 410.

Par ailleurs ces mêmes polymères sont utilisés pour rigidifier un ensemble de fibres et constituer des rubans pour câble optique. Ainsi les fibres optiques, individualisées grâce à une couche mince organique colorée, sont regroupées côte à côte par une résine polyuréthanne acrylate. Les rubans réalisés de cette manière doivent pouvoir glisser suffisamment les uns sur les autres pour assurer la compacité maximale du câble; on constate d'une part que la qualité de glissement est insuffisante et d'autre part que la résine du ruban adhère trop aux couches minces organiques colorées des fibres lorsqu'il faut l'éliminer pour réaliser une à une les connexions entre les fibres de deux rubans.

La présente invention a pour but d'améliorer les résines de type polyuréthanne acrylate pour leurs applications dans les fibres optiques et les rubans de fibres optiques.

La présente invention a pour objet un matériau polymère pour revêtement de fibre optique ou pour ruban à fibres optiques, matériau constitué d'un polyuréthanne acrylate provenant de la réaction d'au moins trois composés qui sont un diol, un diisocyanate et un acrylate, caractérisé par le fait que au moins l'un desdits composés contient du fluor et que au moins l'un desdits composés contient du soufre, ledit polyuréthanne acrylate étant fluoré et soufré.

Ce matériau a comme caractéristique d'être photoréticulable.

Selon une variante, au moins l'un desdits composés contient du fluor et du soufre, comme par exemple un acrylate fluoré et soufré ou un diol fluoré et soufré.

De préférence, le fluor est porté par une chaîne latérale de longueur variable partiellement fluorée.

Selon un premier mode de réalisation, ledit acrylate est un acrylate fluoré et soufré de formule: 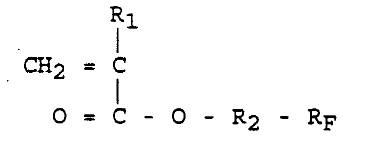 où:
-R₁ est -H, -CH₃, ou -F,
-R₂- est -(CH₂)ₙ-S(O)ᵣ-(CH₂)ₘ-
avec n et m = 2 à 11, et r = 0 à 2, 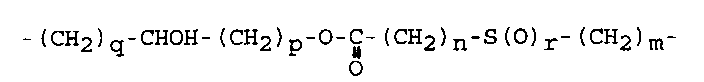 avec q et p = 1 à 10, r = 0 à 2,
et n et m = 2 à 11, 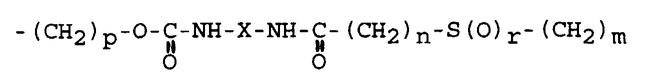 avec p = 1 à 10, r = 0 à 2,
et n et m = 2 à 11,
où X = 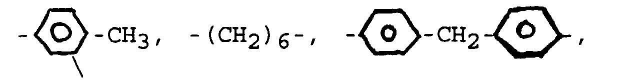 et -R_{F} est (CH₂)ₙ-CₘF₂ₘ₊₁ avec n = 0 à 9 et m = 1 à 10, 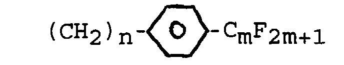 avec n = 0 à 9 et m = 1 à 10.

Selon un second mode de réalisation, ledit acrylate est un acrylate fluoré de formule: 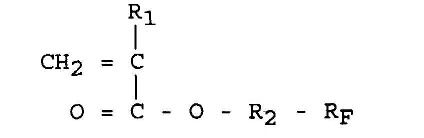 où:
-R₁ est -H, -CH₃, ou -F
-R₂- est -(CH₂)ₙ- avec n = 1 à 4,
-(CH₂)_{q}-CHOH-(CH₂)ₚ- avec q et p = 1 à 10, 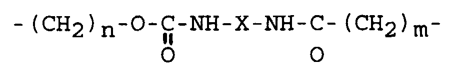 avec n et m = 1 à 10,
où X = 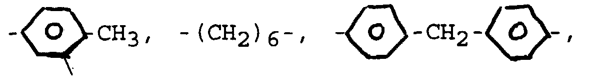 et -R_{F} est -(CH₂)ₙ-CₘF₂ₘ₊₁ avec n = 0 à 9 et m = 1 à 10 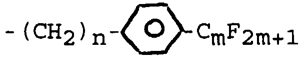 avec n = 0 à 9 et m= 1 à 10.

Ces composés sont par exemple choisis parmi:

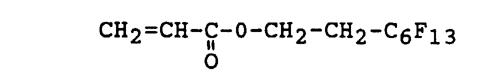

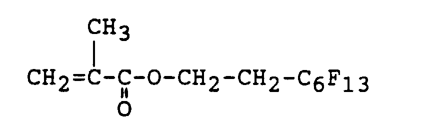

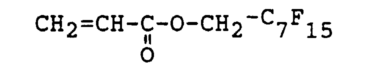

Selon un troisième mode de réalisation, ledit diol est un diol fluoré et soufré choisi parmi: 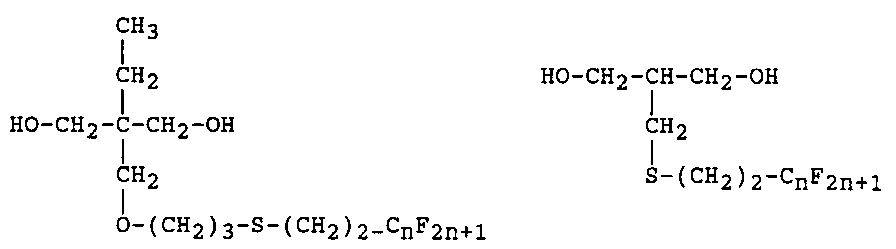 avec n = 1 à 10, et le polybutadiènehydroxytéléchélique (PBHT): 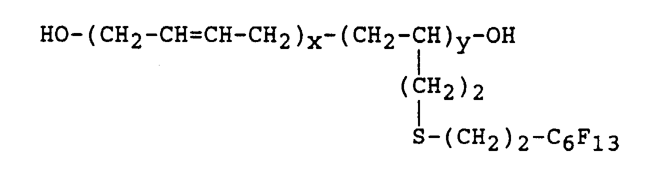 avec x = 18 et y = 4, ou bien x = 40 et y = 10.

Ces diols fluorés et soufrés sont obtenus par addition nucléophile ou radicalaire d'un thiol fluoré sur une liaison éthylénique d'un diol.

Selon un quatrième mode de réalisation, ledit diol est un diol soufré tel que:

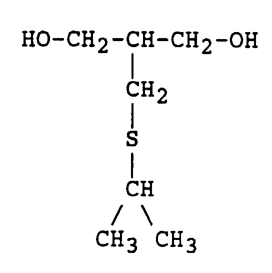

Selon un cinquième mode de réalisation, ledit diol est un diol fluoré choisi parmi: 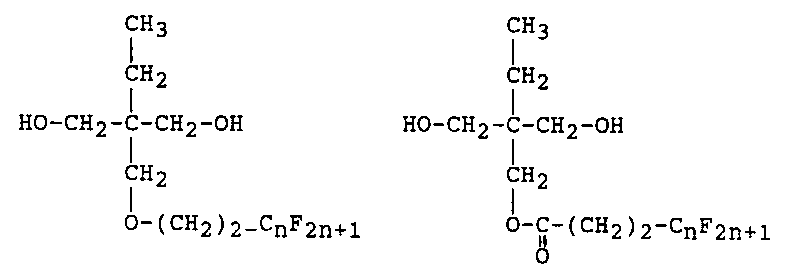 avec n = 1 à 10.

A partir de ces diols fluorés, on peut obtenir les polyuréthannes acrylates fluorés selon l'invention en deux étapes: diol fluoré + diisocyanate ---> prépolymère diisocyanate fluoré + acrylate hydroxylé ---> uréthanne diacrylate fluoré.

Selon un sixième mode de réalisation, ledit diisocyanate est un diisocyanate fluoré de formule: 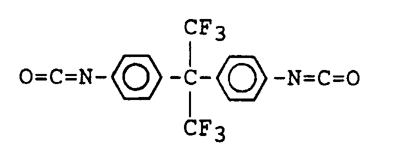 ou dérivé d'un des diols précités.

A partir de ces diisocyanates fluorés, on synthétise un oligomère di ou multiacrylate fluoré par réaction sur un alcool mono ou diacrylate.

D'autres caractéristiques et avantages de la présente invention apparaîtront au cours de la description suivante de modes de réalisation donnés à titre illustratif mais nullement limitatif.

### EXEMPLE 1

On effectue la préparation d'un diol fluoré et soufré de la manière suivante.

On dissout dans 800ml d'acétone, 134g de triméthylolpropane. Puis 1g d'acide paratoluènesulfonique est ajouté au mélange qui est maintenu à 25°C pendant 24 heures. Après évaporation de l'acétone, le produit est distillé sous vide (point d'ébullition bp_{0,6mbar}=90-93°C) et on obtient l'acétal.

Dans 1 litre de soude (NaOH) contenant 5,82g de tetrabutylammonium hydrogénosulfate, sont dissout 30g de l'alcool précédemment obtenu. On ajoute 65,7g de chlorure d'allyle au mélange qui est maintenu à 42°C pendant 24 heures. Le mélange est dilué dans 200ml de chlorure de méthylène, lavé à l'eau, évaporé et séché. Le produit est alors purifié par distillation (bp_{0,2mbar}=61-63°C), et on obtient un éther d'allyle.

En atmosphère d'argon, on dissout 32,33g de 1H,1H,2H,2H-perfluorooctane-1-thiol (PFOT) dans 100ml d'acétonitrile, et la solution est portée à 85°C. Puis on y ajoute 0,4g d'azobisisobutylonitrile (AIBN) et 17,34g de l'éther d'allyle précédemment obtenu. Après 24 heures de réaction, l'acétonitrile est évaporé et le produit séché sous vide.

On redissout 173,4g de ce produit dans 200ml de méthanol et 10ml d'eau. On ajoute à la solution 30ml de résine échangeuse d'ions (AMBERLITE®IR120⁺). Après 24 heures de réaction, la résine est éliminée par filtration et le méthanol est évaporé. On obtient alors un diol fluoré et soufré.

### EXEMPLE 2

Dans 100ml de toluène, on introduit 25g du diol fluoré et soufré obtenu dans l'exemple 1, 18,97g de 2,2,4-triméthylhexaméthylènediisocyanate, et 0,66g de 1,4-diazabicyclo[2.2.2]octane (DABCO), et on laisse réagir le mélange à 80°C pendant 2 heures. Puis on ajoute 10,48g de 2-hydroxyéthylacrylate, et on laisse la réaction se poursuivre dans les mêmes conditions jusqu'à observer par analyse infra-rouge la disparition de la bande -N=C=O à 2240cm⁻¹. Le toluène est alors évaporé et 54g d'oligomère uréthane acrylate fluoré et soufré sont obtenus.

On mélange alors l'oligomère uréthanne acrylate avec 20% en poids d'un diluant réactif qui est l'héxaméthylène-1,6-diacrylate et 3% en poids d'un photoamorceur "IRGACURE 651".

On prend comme référence une fibre optique de l'art antérieur munie d'un revêtement témoin dont la couche secondaire est en "DESOLITE 044". On lui compare une fibre optique selon l'invention munie d'un revêtement B dont la couche secondaire est en matériau obtenu ci-dessus.

On étudie ensuite la perméabilité à l'eau de la couche secondaire du revêtement témoin, d'épaisseur 59µm, et de celle du revêtement B, d'épaisseur 48µm, par les méthodes standard de la norme ASTM D 1653-85 ("Standard Test Methods for Water Vapor Permeability of Organic Coating Films").

Pour cela on mesure les grandeurs suivantes:
- WVT (Water Vapor Transmission Rate) en g/m² x 24 heures, qui représente la quantité de vapeur d'eau susceptible de traverser l'unité de surface du revêtement en 24 heures,
- WVP (Water Vapor Permeance) en g/m² x 24 heures x millimètre de mercure, avec WVP=WVT/ΔP (Δp étant la différence de pression entre les deux faces des revêtements),
- P (Water Vapor Permeability) où P = WVP x l , l étant l'épaisseur du revêtement en g x cm/m² x 24 heures x mm de mercure.

Les valeurs de ces trois grandeurs font apparaître les progrès apportés par le matériau selon l'invention au niveau de la perméabilité à l'eau.

En outre, on caractérise la propriété de glissement des revêtements par leur tension superficielle γ en millinewtons/mètre à 20°C.

| revêtement | épaisseur µm | WVT g/m²x24h | WVP= WVP/ΔP | P= WVPxl |
|---|---|---|---|---|
| témoin | 59 | 70,2 | 8 | 4,7.10⁻² |
| | | | | |
| B | 48 | 32,6 | 3,7 | 1,8.10⁻² |

### EXEMPLE 3

On effectue la préparation d'un diol fluoré et soufré de la manière suivante.

On dissout dans 200ml de tétrahydrofuranne à 70°C 125g de PBHT de masse 1220. Puis on y ajoute 7,6g de AIBN et 160g de PFOT. Après 15 heures de réaction à 70°C, le solvant est évaporé et le diol fluoré et soufré obtenu est séché sous vide.

Il a pour formule:

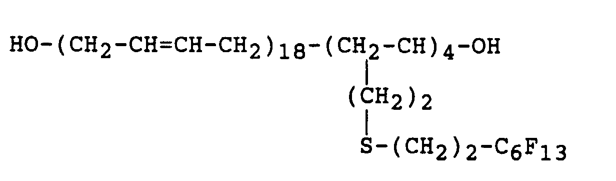

Dans 150ml de toluène, on fait réagir pendant 2 heures à 80°C: 69,2g du diol fluoré et soufré obtenu précédemment, 11,5g de 2,2,4-triméthylhexaméthylènediisocyanate et 0,9g de DABCO. Puis on ajoute 6,15g de 2-hydroxyéthylacrylate et on laisse réagir à 60°C jusqu'à observer par analyse infra-rouge la disparition de la bande -N=C=O. Le toluène est alors évaporé, et 86g d'oligomère uréthane acrylate fluoré et soufré sont ainsi obtenus.

De la même manière que décrit dans l'exemple 2, on mélange l'oligomère précédemment obtenu au diluant réactif et au photoamorceur.

On prend comme référence une fibre optique de l'art antérieur munie d'un revêtement témoin dont la couche secondaire est en "DESOLITE 044". On lui compare une fibre optique selon l'invention munie d'un revêtement C dont la couche secondaire est en matériau obtenu ci-dessus.

On étudie ensuite la perméabilité à l'eau de la couche secondaire du revêtement témoin, d'épaisseur 59µm, et de celle du revêtement C, d'épaisseur 58µm, par les méthodes décrites dans l'exemple 2.

| revêtement | épaisseur µm | WVT g/m²x24h | WVP= WVP/ΔP | P= WVPx1 |
|---|---|---|---|---|
| témoin | 59 | 70,2 | 8 | 4,7.10⁻² |
| | | | | |
| C | 58 | 26,3 | 3,0 | 1,7.10⁻² |

## Revendications

1. Matériau polymère pour revêtement de fibre optique ou pour ruban à fibres optiques, matériau constitué d'un polyuréthanne acrylate provenant de la réaction d'au moins trois composés qui sont un diol, un diisocyanate et un acrylate, caractérisé par le fait que au moins l'un desdits composés contient du fluor et que au moins l'un desdits composés contient du soufre, ledit polyuréthanne acrylate étant fluoré et soufré.

2. Matériau polymère selon la revendication 1, caractérisé par le fait que au moins l'un desdits composés contient du fluor et du soufre.

3. Matériau polymère selon l'une des revendications 1 et 2, caractérisé par le fait que le fluor est porté par une chaîne latérale partiellement fluorée.

4. Matériau polymère selon l'une des revendications 1 à 3, caractérisé par le fait que ledit acrylate est un acrylate fluoré et soufré de formule: 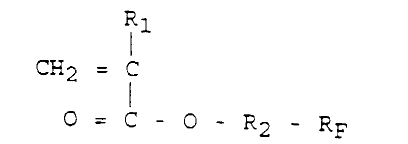 où
-R₁ est -H, -CH₃, ou -F
-R₂- est -(CH₂)ₙ-S(O)ᵣ-(CH₂)ₘ-
avec n et m = 2 à 11, et r = 0 à 2, 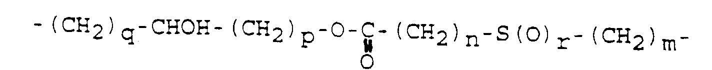 avec q et p = 1 à 10, r = 0 à 2,
et n et m = 2 à 11, 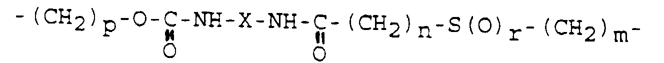 avec p = 1 à 10, r = 0 à 2,
et n et m = 2 à 11,
où X = 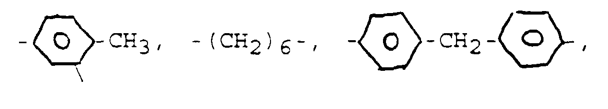 et -R_{F} est -(CH₂)ₙ-CₘF₂ₘ₊₁ avec n = 0 à 9 et m = 1 à 10, 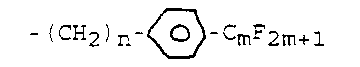 avec n = 0 à 9 et m = 1 à 10.

5. Matériau polymère selon l'une des revendications 1 à 3, caractérisé par le fait que ledit acrylate est un acrylate fluoré de formule: 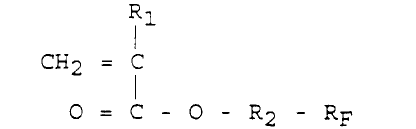 où
-R₁ est -H, -CH₃, ou -F,
-R₂- est -(CH₂)ₙ- avec n = 1 à 4,
-(CH₂)_{q}-CHOH-(CH₂)ₚ- avec q et p = 1 à 10, 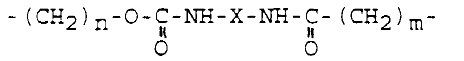 avec n et m = 1 à 10,
où X = 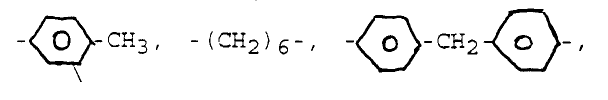 et -R_{F} est -(CH₂)ₙ-CₘF₂ₘ₊₁ avec n = 0 à 9 et m = 1 à 10, 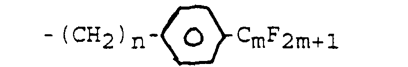 avec n = 0 à 9 et m= 1 à 10.

6. Matériau polymère selon la revendication 5, caractérisé par le fait que ledit acrylate fluoré est choisi parmi:

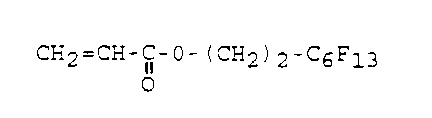

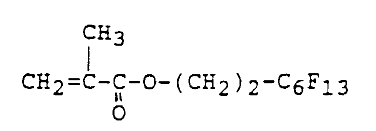

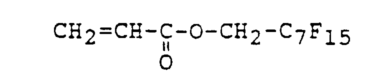

7. Matériau polymère selon l'une des revendications 1 à 3, caractérisé par le fait que ledit diol est un diol fluoré et soufré choisi parmi: 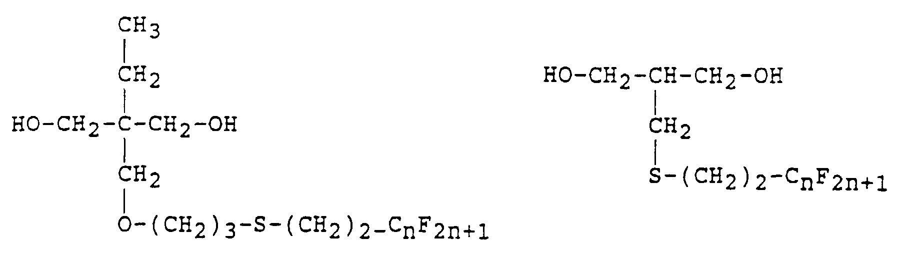 avec n = 1 à 10, et 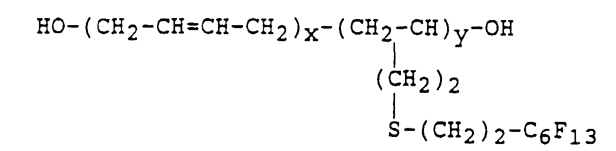 avec x = 18 et y = 4, ou bien x = 40 et y = 10.

8. Matériau polymère selon l'une des revendications 1 à 3, caractérisé par le fait que ledit diol est un diol soufré tel que:

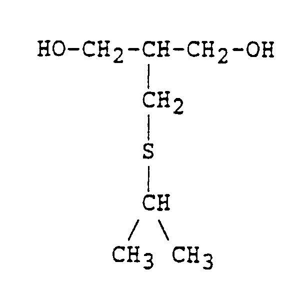

9. Matériau polymère selon l'une des revendications 1 à 3, caractérisé par le fait que ledit diol est un diol fluoré choisi parmi: 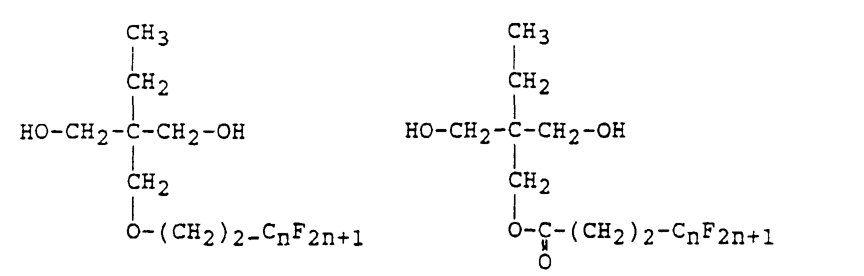 avec n = 1 à 10.

10. Matériau polymère selon l'une des revendications 1 à 3, caractérisé par le fait ledit diisocyanate est un diisocyanate fluoré de formule:

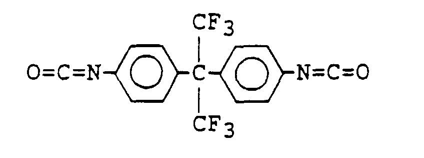

11. Matériau polymère selon l'une des revendications 1 à 3, caractérisé par le fait que ledit diisocyanate est un diisocyanate fluoré dérivé d'un diol choisi parmi: 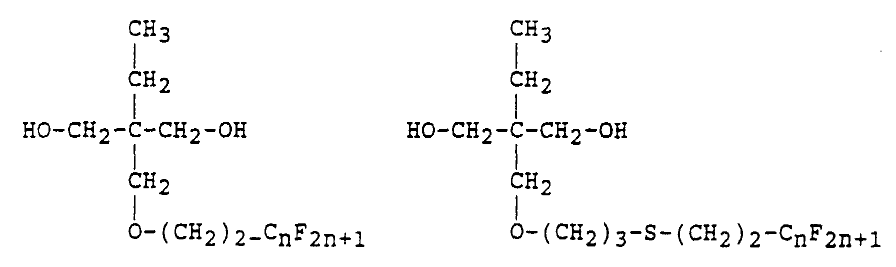 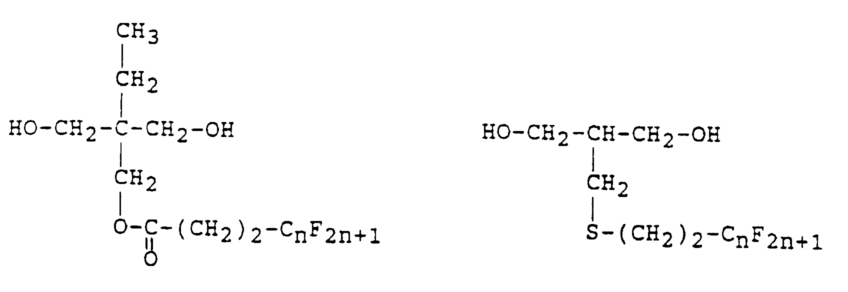 avec n = 1 à 10.

## Patentansprüche

1. Polymermaterial zur Beschichtung von optischen Fasern oder optischen Bandkabeln, wobei das Material aus Polyurethan-acrylat gebildet wird, das aus der Reaktion von wenigstens drei Verbindungen, einem Diol, einem Diisocyanat und einem Acrylat stammt,
**dadurch gekennzeichnet, daß** wenigstens eine der genannten Verbindungen Fluor enthält,
und daß wenigstens eine der genannten Verbindungen Schwefel enthält, wobei das genannte Polyurethan-acrylat fluor- und schwefelhaltig ist.

2. Polymermaterial nach Anspruch 1,
**dadurch gekennzeichnet, daß** wenigstens eine der genannten Verbindungen Fluor und Schwefel enthält.

3. Polymermaterial nach einem der Ansprüche 1 und 2,
**dadurch gekennzeichnet, daß** das Fluor von einer teilweise fluorierten Seitenkette getragen wird.

4. Polymermaterial nach einem der Ansprüche 1 bis 3,
**dadurch gekennzeichnet, daß** das genannte Acrylat ein fluor- und schwefelhaltiges Acrylat ist, mit der Formel: 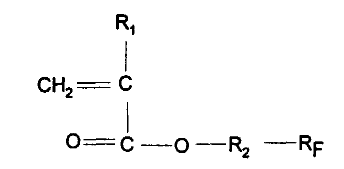 wobei:
-R₁ ist -H, -CH₃ oder -F,
-R₂₋ ist -(CH₂)ₙ-S(O)ᵣ-(CH₂)ₘ-
mit n und m = 2 bis 11, und r = 0 bis 2, 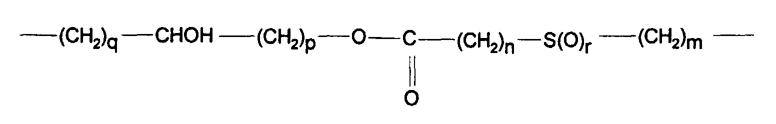 mit q und p = 1 bis 10, r = 0 bis 2,
und n und m = 2 bis 11, 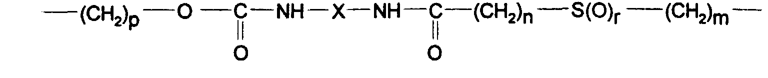 mit p = 1 bis 10, r = 0 bis 2,
und n und m = 2 bis 11,
wobei X = 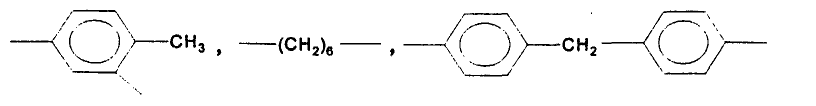 und -R_{F} ist (CH₂)ₙ-CₘF₂ₘ₊₁ mit n = 0 bis 9 und m = 1 bis 10, 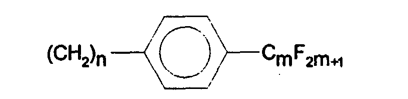 mit n = 0 bis 9 und m = 1 bis 10.

5. Polymermaterial nach einem der Ansprüche 1 bis 3,
**dadurch gekennzeichnet, daß** das genannte Acrylat ein fluorhaltiges Acrylat ist, mit der Formel: 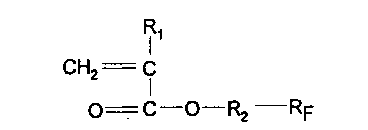 wobei:
-R₁ ist -H, -CH₃ oder -F,
-R₂- ist -(CH₂)ₙ- mit n = 1 bis 4,
-(CH2)_{q}-CHOH-(CH₂)ₚ- mit q und p = 1 bis 10, 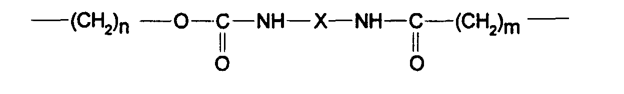 mit n und m = 1 bis 10,
oder X = 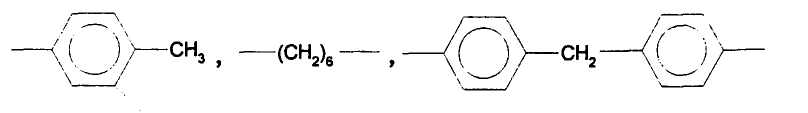 und -R_{F} ist -(CH₂)ₙ-CₘF₂ₘ₊₁ mit n = 0 bis 9 und m = 1 bis 10 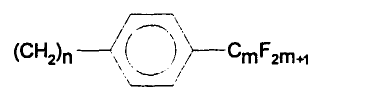 mit n 0 bis 9 und m = 1 bis 10.

6. Polymermaterial nach Anspruch 5,
**dadurch gekennzeichnet, daß** das genannte fluorierte Acrylat gewählt wird aus:

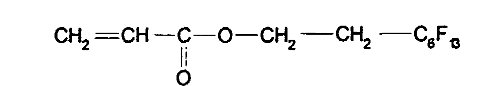

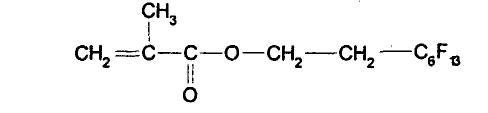

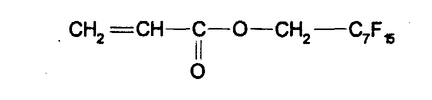

7. Polymermaterial nach einem der Ansprüche 1 bis 3,
**dadurch gekennzeichnet, daß** das genannte Diol ein fluor- und schwefelhaltiges Diol ist, gewählt aus: 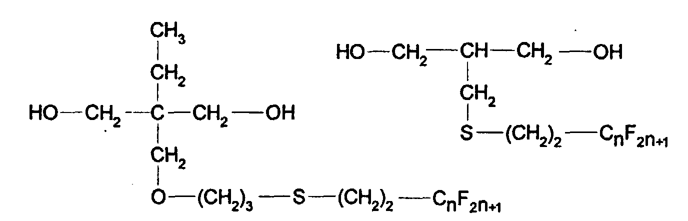 mit n = 1 bis 10, und 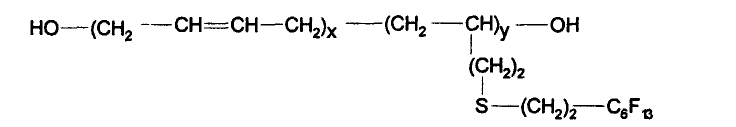 mit x = 18 und y = 4, oder aber x = 40 und y = 10.

8. Polymermaterial nach einem der Ansprüche 1 bis 3,
**dadurch gekennzeichnet, daß** das genannte Diol ein schwefelhaltiges Diol ist, wie

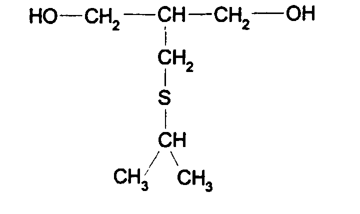

9. Polymermaterial nach einem der Ansprüche 1 bis 3,
**dadurch gekennzeichnet, daß** das genannte Diol ein fluoriertes Diol ist, wie 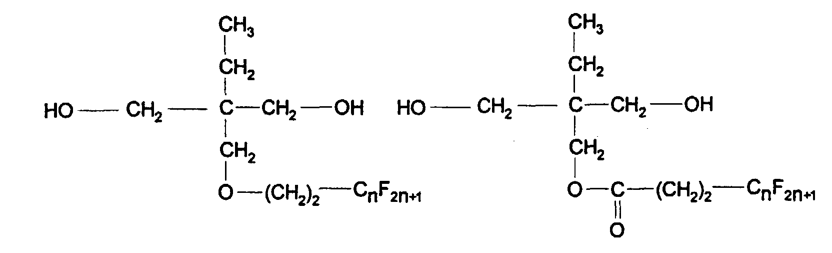 mit n = 1 bis 10.

10. Polymermaterial nach einem der Ansprüche 1 bis 3,
**dadurch gekennzeichnet, daß** das genannte Diisocyanat ein fluoriertes Diisocynat ist, mit der Formel:

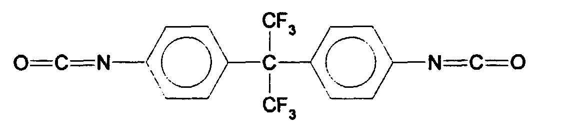

11. Polymermaterial nach einem der Ansprüche 1 bis 3,
**dadurch gekennzeichnet, daß** das genannte Diisocyanat ein von einem Diol abgeleitetes fluoriertes Diisocynat ist, gewählt aus 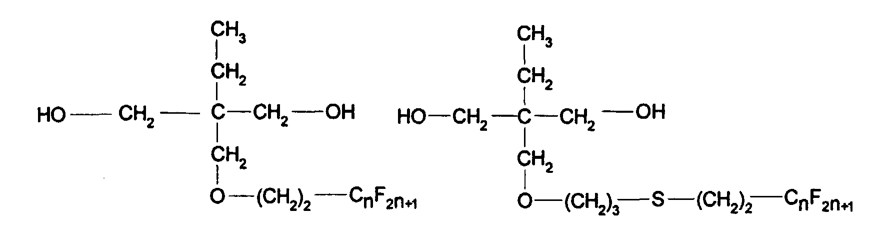 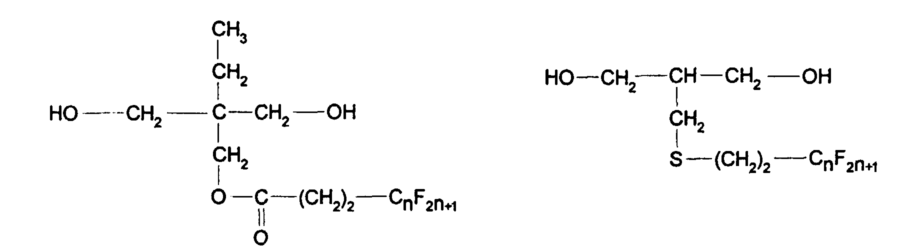 mit n 1 bis 10.

## Claims

1. A polymer material of the fluorine-containing polyurethane acrylate type for coating an optical fiber or for an optical fiber tape, the material being based on at least a diol, a diisocyanate, and an acrylate, and being characterized by the fact that at least one of the above compounds contains fluorine and that at least one of the above compounds contains sulfur.

2. A polymer material according to claim 1, characterized by the fact that at least one of said compounds contains both fluorine and sulfur.

3. A polymer material according to claim 1 or 2, characterized by the fact that the fluorine is carried by a partially fluorinated side chain.

4. A polymer material according to any one of claims 1 to 3, characterized by the fact that said acrylate is a fluorine-containing and sulfur-containing acrylate having the formula: 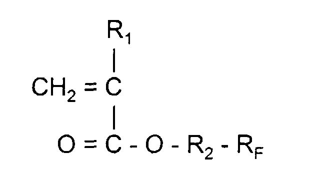 where
-R₁ is -H, -CH₃, or -F
-R₂- is -(CH₂)ₙ-S(O)ᵣ-(CH₂)ₘ-
with n and m = 2 to 11 and r = 0 to 2 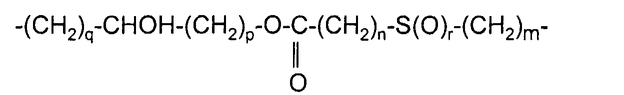 with q and p = 1 to 10, r = 0 to 2, and n and m = 2 to 11 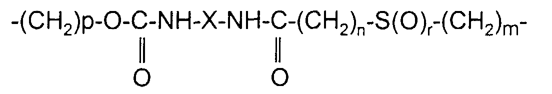 with p = 1 to 10, r = 0 to 2, and n and m = 2 to 11
where: X = 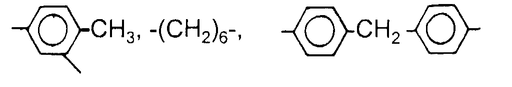 and -R_{F} is
-(CH₂)ₙ-CₘF₂ₘ₊₁ with n = 0 to 9 and m = 1 to 10 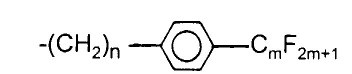 with n = 0 to 9 and m = 1 to 10.

5. A polymer material according to any one of claims 1 to 3, characterized by the fact that said acrylate is a fluorine-containing acrylate having the formula: 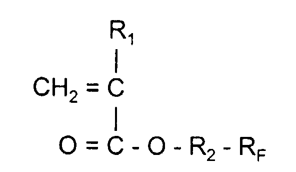 where
-R₁ is -H, -CH₃, or -F
-R₂- is -(CH₂)ₙ- where n = 1 to 4
-(CH₂)_{q}-CHOH-(CH₂)ₚ- where q and p = 1 to 10 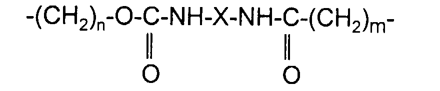 where n and m = 1 to 10
where X = 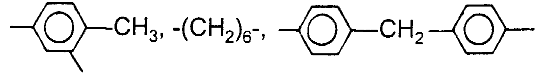 and -R_{F} is
-(CH₂)ₙ-CₘF₂ₘ₊₁ with n = 0 to 9 and m = 1 to 10 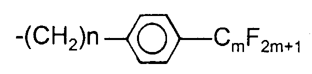 with n = 0 to 9 and m = 1 to 10.

6. A polymer material according to claim 5, characterized by the fact that said fluorine-containing acrylate is selected from:

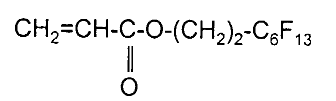

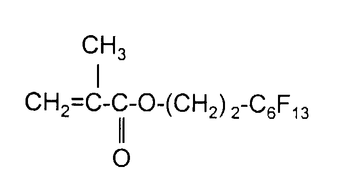

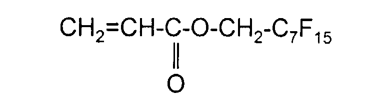

7. A polymer material according to any one of claims 1 to 3, characterized by the fact that said diol is a fluorine-containing and sulfur-containing diol selected from: 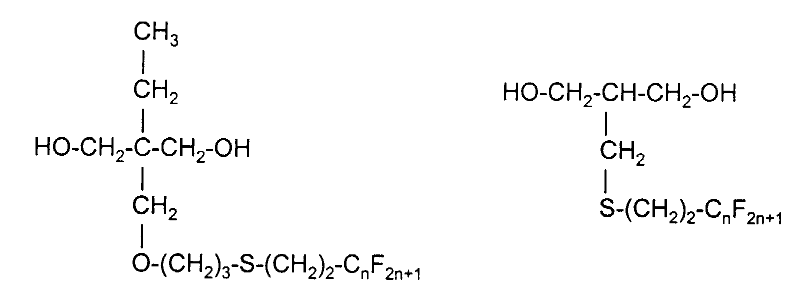 with n = 1 to 10 and: 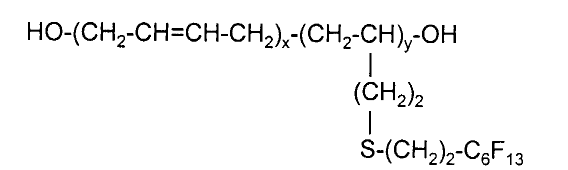 with x = 18 and y = 4 or else x = 40 and y = 10.

8. A polymer material according to any one of claims 1 to 3, characterized by the fact that said diol is a sulfur-containing diol such as:

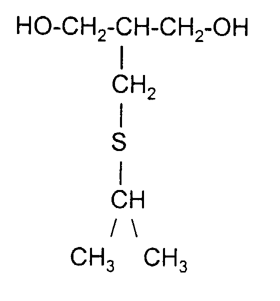

9. A polymer material according to any one of claims 1 to 3, characterized by the fact that said diol is a fluorine-containing diol selected from: 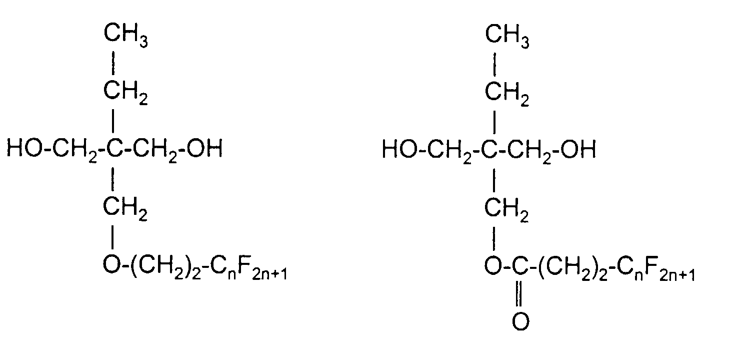 where n = 1 to 10.

10. A polymer material according to any one of claims 1 to 3, characterized by the fact that said diisocynate is a fluorine-containing diisocynate of the formula:

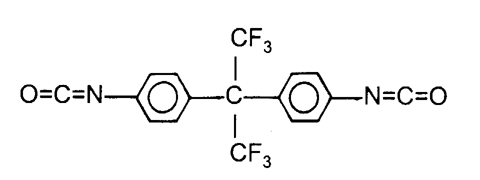

11. A polymer material according to any one of claims 1 to 3, characterized by the fact that said diisocynate is a fluorine-containing diisocynate derived from a diol selected from: 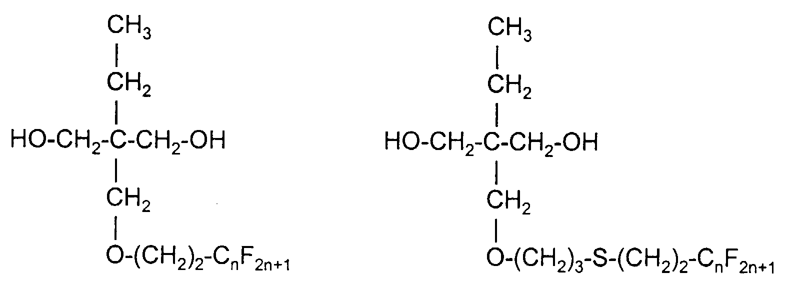 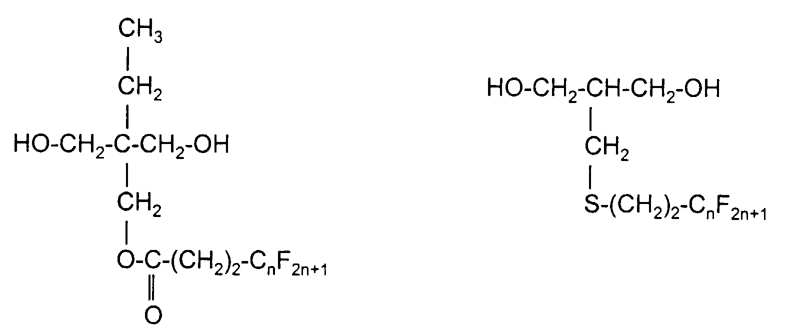 where n = 1 to 10.
